# EUROPÄISCHE PATENTANMELDUNG

(11) **EP 1 262 294 A1**
(43) Veröffentlichungstag der Anmeldung: **04.12.2002**
(21) Anmeldenummer: 02010527.6
(22) Anmeldetag: 10.05.2002
(51) Int. Cl.: B27N 3/28, B29B 9/14

(54) **Holzsubstitut**

(30) Priorität: 12.05.2001 DE 10123085
(71) Anmelder: Fagerdala Deutschland GmbH, 99885 Ohrdruf (DE)
(72) Erfinder: Bruning, Jürgen, 99885 Ohrdruf (DE)
(74) Vertreter: Kaewert, Klaus

(57) **Zusammenfassung**

Nach der Erfindung werden Rahmen für Polstermöbel aus einem Extrudat bzw. Spritzgußmaterial hergestellt, das aus einer Kunststoffmischung mit zerkleinerten Pflanzen besteht.

## Beschreibung

Die Erfindung betrifft ein Holzsubstitut.

Holz findet in diversen Bereichen Anwendung. Dazu gehören Möbel, Innenausbau, Messebau, sogar Kfz-Auskleidungen.

Bei den Möbeln ist zu unterscheiden zwischen Möbel, bei denen das Holz lediglich als Konstruktionsmaterial oder auch Sichtflächen bildend Anwendung findet.

In Polstermöbeln findet eine Holz zumeist nur als Konstruktionsmaterial Anwendung. Üblicherweise besitzen alle Polstermöbel eine feste Unterkonstruktion, z.B. einen Rahmen, auch Gestell genannt. In und an dem Gestell werden wahlweise Sitzflächen, Rückenlehnen und Armlehnen sowie die Füße montiert. Wahlweise bildet das Gestell auch unmittelbar die Sitzfläche, Rückenlehnen und Armlehnen oder umgekehrt. Das Material, aus dem der Rahmen gefertigt wird, ist das Konstruktionsmaterial.

Traditionell werden Rahmen für Polstermöbel aus Holz gefertigt. Verwendet werden Bretter und Stäbe. Holz hat den Vorteil, daß die einzelnen Teile miteinander sowie mit dem Polster und dem Polsterbezug durch sogenanntes Tackern verbunden werden können. Zum Tackern dienen U-förmige Klammern. Die Klammer ersetzen die Polsternägel aus früherer Zeit.

In neuerer Zeit finden auch Kunststoffe und für gehobene Möbelqualitäten auch Metalle Verwendung.

Zum Beispiel wird mit der PCT/DE98/02541 ein Aluminiumprofil als Konstruktionsmaterial vorgeschlagen, das verschiedene Nuten zeigt. Die Nuten sind geeignet, um die Profile zumindest miteinander zu verbinden. Als Verbindungselemente der bekannten Profile dienen Schrauben und Muttern.

So vorteilhaft sich die Metallprofile auch erweisen. Die Kosten des Aluminiumprofils sind unverkennbar ein Mehrfaches der Kosten für einen Holzrahmen.

Andere Möbel zeigen Holz als Sicht- und Dekor- bzw. Schmuckflächen.

Die damit gegebenen Anforderungen werden zum Teil nur von bestimmten seltenen Holzsorten erfüllt. Seltene Hölzer sind relativ teuer. Deshalb gehört es schon lange zum Stand der Technik, Furniere aus den seltenen Hölzern zu schneiden, welche die Sichtfläche bilden. Furniere beinhalten dünne, folienartige Holzschnitte. Dabei kommt ein erheblicher Ausschuß vor, wenn die Furniere verarbeitet werden sollen, wie das Holz gewachsen ist.

Der Erfindung liegt daher die Aufgabe zugrunde, ein vorteilhaftes Holsubstitut zu schaffen. Nach Möglichkeit soll auch ein Profil entstehen das die Vorteile der beschriebenen Metallprofile mit den Kostenvorteilen von Holz verbindet.

Nach der Erfindung wird das durch ein Extrudat aus Kunststoff, geschäumt oder ungeschäumt, mit einem Anteil von zerkleinerten Pflanzen, insbesondere von Holz erreicht, wobei bezogen auf Holz der Anteil an Pflanzen mindestens 40Gew% vom Extrudat beträgt und wobei die Zug- und/oder Druckfestigkeit anderer verwendeter Pflanzenpartikel höchstens 50% geringer als die Festigkeit vergleichbarer Holzpartikel ist. Vergleichbare Planzenpartikel können auch Körnerschrot, zerkleinertes Heu und zerkleinertes Stroh sein.

Es ist günstig, den Kunststoff-Anteil am Extrudat so weit wie möglich zu reduzieren. Dabei können sich Kunststoffanteile am Extrudat von weniger als 50 Gew%, vorzugsweise weniger als 40Gew%, und noch weiter bevorzugt bei weniger als 30 Gew% ergeben. Der optimale Kunststoff-Anteil ist davon abhängig, ob das Extrudat geschäumt oder ungeschäumt ist, welcher Kunststoff und welche Hilfsmittel zum Einsatz kommen.

Dadurch, daß zerkleinerte Pflanzen als Extrudatbestandteil vorgesehen sind, können auch beliebige Holzreste zum Einsatz kommen, im Prinzip beliebige Holzabfälle. Die Holzreste werden extrem günstig angeboten. Das gleiche gilt auch für Heu, Schrot und in besonderem Maß für Stroh. Das Stroh erzielt in der Regel kaum einen Erlös, der das Aufnehmen, Ballenpressen und den Transport deckt. Deshalb ist in vielen ländlichen Bereichen ein Abflämmen von Stroh üblich. Bei diesen Kosten für die Pflanzen und mit üblichen Kosten für bevorzugt vorgesehene Kunststoffe reduziert sich der Preis des erfindungsgemäßen Extrudats gegenüber den beschriebenen Aluminiumprofilen leicht um 75%.

Der Vergleich von Holzpartikeln mit sonstigen Pflanzenpartikeln kann an Einzelpartikeln vorgenommen werden. Vorzugsweise erfolgt der Vergleich im Extrudat. D.h. die zerkleinerten Pflanzen werden einem Extrusionsversuch unterworfen und das Extrudat wird verglichen. Das Extrudat läßt sich viel leichter vergleichen als die einzelnen Partikel. Bei ausreichender Eignung der Pflanzenreste lassen sich in weiteren Versuchen mit Extrudat die optimalen Mischungen ohne weiteres einstellen.

In dem Rahmen können sich für die Planzenpartikel Mischungsanteile bis zu 95Gew% im Extrudat ergeben.

Vorzugsweise liegen die Mischungsanteile für die Pflanzenpartikel im Extrudat bei 70 bis 85 Gew% vom Extrudat.

Die Abmessungen der Pflanzenpartikel werden bei Verwendung üblicher Extruder von der Durchgängigkeit der Partikel in dem Extruder bestimmt. Dabei wird die Durchgängigkeit von dem Spiel der bewegten Extruderteile im Extruder und von der Öffnungsweite des Düsenspaltes bestimmt. Die Durchgängigkeit kann anhand der bekannten Maschinendaten bestimmt werden. Danach können die für den jeweiligen Extruder zulässigen Abmessungen der Pflanzenpartikel festgelegt werden. Aus Sicherheitsgründen werden die Abmessungen der Planzenpartikel mindestens 10% kleiner gewählt als die oben beschriebene Durchgängigkeit. Die Abmessungen der Pflanzenpartikel können umso näher an die beschriebene Durchgängigkeit heranreichen, je gleichmäßiger die Abmessungen sind. Extrem ungleichmäßig sind die Abmessungen von Fasern. Beim Einsatz von Fasern wird der Faserdurchmesser mindestens 30% kleiner gewählt als die oben beschriebene Durchgängigkeit, um zu vermeiden, daß sich die Fasern ballen und vom Extruder zerkleinert werden.

Vorzugsweise wird eine Faserlänge von 0,5 bis 15 mm gewählt.

In dem Rahmen oder aus Gründen der Zerkleinerungsfeinheit können sich Abmessungen bis zu 0,005 mm Feinheit für die Pflanzenpartikel ergeben.

Alternativ kann auch die Durchgängigkeit der Extruder der gewünschten Partikelgröße angepaßt werden. Das geschieht im Wege des Extruderneubaus oder des Austausches von Bauteilen, z.B. des Austausches der Extruderschnecke, der Düse oder der Buchse im Extrudergehäuse. Zeitgemäße Extruder besitzen eine Buchse im Extrudergehäuse, in der die Schnecken umlaufen.

Das Verhältnis der Durchgängigkeit durch den umgebauten oder neu gebauten Extruder zu dem Pflanzenabmessungen kann das gleiche wie beim Einsatz von Pflanzenpartikeln in herkömmlichen Extrudern sein.

Auf dem Wege kann die Durchgängigkeit der Extruder ohne weiteres einem Partikeldurchmesser von 0,5 mm oder mehr angepaßt werden.

Als Kunststoffe kommen alle extrudierbaren Kunststoffe in Betracht, insbesondere Polethylen (PE), Polystyrol (PS), Polyurethan (PU) und Polypropylen (PP). Besonders bevorzugt findet PP Anwendung.

Zugleich ist bei PP von Vorteil, einen Haftvermittler beizufügen, der die Haftung zum Holz erleichtert.

PP kann unterschiedlich beschaffen sein. Die Unterschiede können für die Verarbeitungsfähigkeit von PP entscheidend sein.

Die Unterscheidungskriterien sind unter anderem die Schmelze-Volumenfließrate MVR und die Schmelze-Massen-Fließrate MFR. Als Vergleichszahl für das Fließverhalten einer Schmelze wird MVR benutzt. MVR ist definiert als das Volumen einer Schmelze, das in 10 min bei vorgegebener Temperatur und vorgegebenem Druck durch eine Kapillare fließt. Die MFR wird unter gleichen Bedingungen ermittelt, aber in Gramm pro 10min angegeben. Beide Methoden werden nach ISO 1133 durchgeführt. MFR wird auch als MFI (Melt flow Index) bezeichnet. Nach der Erfindung wird vorzugsweise ein PP mit einem MFR/MFI von mindestens 10 Gramm pro 10 min bei einer Temperatur von 190 Grad Celius.

Die Haftvermittler können eine mangelnde Haftung von Kunststoff mit Pflanzenpartikeln kompensieren.

Haftvermittler bilden Molekularbrücken an den Grenzflächen zwischen den zu verbindenden Stoffen, hier dem Kunststoff. Soweit noch andere Füllstoffe oder Armierungs/Verstärkungsmittel wie z.B. Glasfasern Einsatz finden, können die Haftvermittler auch die Aufgabe haben, die Haftung zu diesen anderen Stoffen zu erhöhen. Haftvermittler können sein, VC(Vinylchlorid)-Copolymerisate, polymerisierbare Polyester oder Vinyl-Acrylnitril-Methacrylsäure-Copolymerisate, Phenolharze, Kautschukderivate oder Acrylharze ohne oder mit PF(Phenol-Formaldehyd)- bzw. EP(Epoxid)-Harzen.

Als Haftvermittler können auch EVA (Ethylen-Vinylacetat-Copolymerisate) Anwendung finden; desgleichen Kunststoffe besserer Haftfähigkeit (z.B. PE) bei Kunststoffen schwächerer Haftfähigkeit (z.B. PP).

Ausreichend kann auch schon sein, die Pflanzenpartikel zu hydrophobieren, d.h. die Oberflächenspannung herabzusetzen.

Der Kunststoff wird als Granulat mit den Pflanzenpartikeln und Zuschlägen in den Extruder aufgegeben. Wahlweise beinhalten die Granulate bereits eine Mischung von Kunststoff und Zuschlägen.

Die Pflanzenpartikel werden vorzugsweise mit einem Schüttgewicht von mindestens 400 Gramm pro Liter, vorzugsweise von mindestens 500 Gramm pro Liter und noch weiter bevorzugt von mindestens 600 Gramm pro Liter zugegeben. Durch das hohe Schüttgewicht wird das Erreichen eines hohen Zumischungsanteiles an Pflanzenpartikeln erleichtert.

Von sich aus haben die Pflanzenpartikel in Schüttung ein sehr viel geringeres Schüttgewicht.

Das Schüttgewicht kann'mit Hilfe einer Stopfeinrichtung erhöht werden. Die Stopfeinrichtung kann eine Schnecke bzw. eine Presse sein.

In weiterer Ausbildung der Erfindung werden die Pflanzenpartikel in Form von gepreßten Pellets zugegeben. Diese Vorgehensweise macht die Verwendung von Stopfeinrichtungen entbehrlich. Das gilt besonders dann, wenn Pellets verwendet werden, die als Brennstoff handelsüblich sind bzw. wenn Pellets auf dem gleichen Wege wie die als Brennstoff bestimmten Pellets erzeugt werden. Die Brennstoff-Pellets sind Gegenstand der Ö-Norm M7135 bzw. der DIN 51731. Dabei ergeben sich
Normlängen 10 bis 30 mm bzw. kleiner 100 mm
Normdurchmesser 6 bis 8 mm bzw. 4 bis 10mm
Dichten von 1,0 bis 1,4 bzw. 1,12 Gramm pro Kubikzentimeter
Schüttgewicht von 650 kg pro Kubikmeter
Restfeuchte 8 bis 10 Gew% nach Pelletisierung, weniger nach Lagerung
Bindemittelanteil (Kartoffel- oder Maisstärke) von 1 bis 2 Gew%

Die bekannten Brennstoffpellets werden vorzugsweise aus Abfallholz erzeugt. Dazu wird zunächst in Abhängigkeit von der Endbeschaffenheit der Brennstoffpellets das Abfallholz zerkleinert, vergleichmäßigt, gegebenenfalls getrocknet und einer Presse zugeführt. Als Presse hat sich die Kollergangpresse bewährt. In einer Kollergangpresse werden die Holzpartikel mit einem Rad oder Scheibe durch Löcher in einer Matrize hindurchgepreßt.

Die Erfindung ist nicht an die Einhaltung der Normbedingungen gebunden. Es können kleinere und/oder größere Pellets Verwendung finden, auch in Mischung mit normgerechten Brennstoffpellets. Vorzugsweise finden nach der Erfindung Brennstoffpellets mit einem Durchmesser von 4 bis 14 mm und einer Länge von 5 bis 20 mm Verwendung.

Die Abmessungen können im Hinblick auf das Einzugverhalten des Extruders optimiert werden. Dabei ergeben sich für unterschiedliche Extruderbauarten unterschiedliche

Bedingungen. Besonders günstige Verhältnisse ergeben sich an Doppelschneckenextrudern, weil diese Extruder haben:
eine sehr hohe Einzugswirkung
eine sehr hohe Zerkleinerungswirkung im Hinblick auf die Pellets
einen sehr guten Druckaufbau.

Vorteilhafterweise können Extruder aus verschiedenen Elementen unterschiedlicher Bauart zusammengesetzt werden. Deshalb ist es möglich, für die Plastifizierungszone ein dort günstiges Element in der Bauart eines Doppelschneckenextruders einzusetzen und dieses Element in anderen Extruderzonen mit anderen Bauarten zu kombinieren, die dort Vorteile haben.

Ähnlich wie bei den Abmessungen können auch andere Eigenschaften von den Norm-Eigenschaften von Brennstoffpellets abweichen. Das gilt zum Beispiel für die Feuchte.

Die Feuchte kann durch Trockung auf jedes für die Extrusion gewünschte Maß reduziert werden. Gewünscht ist dabei nicht immer ein minimaler Feuchtegehalt, sondern wahlweise ein bestimmter Feuchtegehalt, mit dem Einfluß auf den Extrusionsvorgang und/oder auf die Beschaffenheit des Extrudats genommen wird.

Unter Druck und Temperatur schmilzt der Kunststoff auf. Zugleich werden die Pellets zerstört, ohne daß das Schüttgewicht verringert wird.

Im weiteren Gang der Einsatzmischung durch den Extruder wird die Mischung homogenisiert. Für die Homogenisierungszone und Dispergierungszone ist es von Vorteil; dort Extruderelemente einzusetzen, die eine große Mischleistung besitzen. Das sind z.B. Elemente mit der Bauart eines Planetwalzenextruders. Dieses Element besitzt zugleich eine hohe Kühlwirkung, mit der sich die Verarbeitungstemperatur sehr genau kontrollieren läßt. Je nach Pflanzenart bzw. Holzart liegt die maximale Verarbeitungstemperatur für die Schmelze vorzugsweise zwischen 200 und 230 Grad Celsius bei einer maximalen Verweildauer (Wärmebelastungsdauer) von 15 min. Bei kürzerer Dauer kann die maximale Temperatur höher als bei längerer Dauer sein.

Bei der weiteren Extrusion ist zwischen dem Extrudieren ungeschäumten Kunststoffes und dem Extrudieren geschäumten Kunststoffes zu unterscheiden.

Bei beiden Extrusionsvorgängen kann ein bestimmter Feuchtegehalt erwünscht sein.

Die Restfeuchte kann als Gleitmittel dienen. Die Restfeuchte kann auch in chemische Reaktion treten. Zum Beispiel kann die Feuchte in Reaktion mit dem Lignin der Pflanzenpartikel treten. Überraschender Weise kann damit eine verbesserte Haftung zwischen Holz und Kunststoff bewirkt werden. Der geeigente Gehalt an Feuchte/Lignin läßt sich durch Variation der Feuchte und Variation des Ligningehaltes austesten. Lignin steht auch in flüssiger Form handelsüblich zur Verfügung.

Wenn bei der Extrusion kein Wasser gewünscht ist, kann dem einerseits durch Trocknung der Pflanzenpartikel vor der Extrusion entgegengewirkt werden. Zusätzlich oder anstelle der Trocknung kann die Feuchte nach Verdampfung im Extruder im Wege der Entgasung entfernt werden. Die Entgasung kann unmittelbar nach der Verdampfung stattfinden. Das ist regelmäßig in der Plastifizierungszone der Fall. Dort findet die notwendige Erwärmung statt.

Diese Erwärmung entsteht aus der Verformungsarbeit beim Plastifizierung und gegebenenfalls durch Zuführung von Wärme. Die Zuführung von Wärme kann z.B. über eine Temperierung im Extrudergehäuse erfolgen.

Die Entgasung findet, soweit sie gewünscht ist, spätestens unmittelbar vor der Extrusionsdüse statt.

Die Entgasung setzt voraus, daß der Schmelzdruck reduziert wird.

Beliebt ist die Entgasung bei Verwendung von zwei Extrudern in Tandemanordnung an der Übergabe zwischen den beiden Extrudern.

Die Entgasung kann auch in dem Extruder erfolgen. Die notwendige Druckreduzierung der Schmelze kann mit verschiedenen Maßnahmen erfolgen, z.B. durch Änderung der Ganghöhe der Schnecke im Extruder.

Zur Entgasung kann die Schmelze auch aus dem Extruder abgezogen und über eine Entgasungsvorrichtung geführt und wieder in den Extruder zurückgeführt werden.

Dabei kann die Drucksteuerung durch Zwischenschaltung einer Schmelzepumpe wesentlich erleichtert werden. Das gilt auch für den Druck unmittelbar vor der Extrusionsdüse (Werkzeug). Hier kann der Druck zusätzlich noch durch die Schmelzepumpe vergleichmäßigt werden und so die Qualität des Extrudats verbessert werden.

Zur Herstellung eines erfindungsmäßen Schaumextrudats wird der Einsatzmischung ein Treibmittel zugegeben. Das Treibmittel soll in der Schmelze als Gas fein verteilt werden und beim Austritt des Extrudats aus dem Extruder, d.h. beim Austritt aus einer Atmosphäre hohen Drucks in eine Atmosphäre geringen Drucks in der Schmelze expandieren und so den Schäumvorgang bewirken. Die Atmosphäre geringen Drucks ist vorzugsweise die Umgebung.

Der Druck vor der Extrusionsdüse ist abhängig von dem verarbeiteten Kunststoff, dem Treibmittel und anderem. Vorzugsweise beträgt der Druck beim Einsatz von PP unmittelbar vor der Düse mindestens 100 bar.

Das Treibmittel kann ein chemisches Treibmittel sein, das zusammen mit dem Kunststoffgranulat aufgegeben wird. Ein geeignetes Treibmittel ist z.B. Backpulver, das unter Druck und Temperatur in die Bestandteile Kohlendioxid und Stickstoff zerfällt.

Wahlweise tritt das Wasser/Feuchte bei der Schaumextrusion treibmittelbildend in Funktion.

Das kann im Rahmen einer Isocyanat-Wasser-Reaktion oder auch in anderen chemischen Reaktion geschehen.

Wahlweise wird die Feuchte/Wasser auch als physikalisches Treibmittel oder als Keimbildner genutzt. Bei neueren Bestrebungen zur Verwendung von Kohlendioxid als Treibmittel kann die Feuchte/Wasser erhebliche Vorteile zeigen. Das gilt besonders bei Treibmittelmischungen von Kohlendioxid mit Alkoholen oder anderen Bestandteilen, die der Verteilung des Kohlendioxids in der Schmelze dienen.

Vorzugsweise wird das Treibmittel flüssig und/oder gasförmig an geeigneter Stelle in den Extruder gedrückt(Direktbegasung). Günstig sind dafür Dosierpumpen.

Eine geeignete Stelle für die Direktbegasung ist z.B. das Ende der Homogenisierungszone.

Geeignete Treibmittel sind alle bei der Kunststoffextrusion angewendeten Treibmittel einschließlich Kohlenwasserstoffen und physikalischen Treibmitteln.

Vorzugsweise findet Kohlendioxid Anwendung, das aus der Atmosphäre gewonnen wird und durch die Extrusion und anschließendes Ausdiffundieren aus dem Schaum wieder frei wird.

Gleichwohl wird auf dem Wege keine Umweltbelastung verursacht. D.h. es wird der Kohlendioxidgehalt in der Luft nicht durch die erfindungsgemäße Extrusion verändert.

Das Kohlendioxid bringt bei der erfindungsgemäßen Extrusion noch weitere Vorteile.

Es bildet mit frei werdendem Wasser nämlich Kohlensäure. Nach der Erfindung wird das genutzt um das Wasser zu binden, das von den Pflanzenpartikeln in den Extruder getragen wird. Aus dem Wasser entsteht Wasserdampf, der bei anderen Treibmitteln im Wege der sogenannten Entgasung entfernt werden muß.

Vorzugsweise wird die Feuchte der Pflanzenpartikel durch entsprechende vorausgehende Trocknung so eingestellt, daß der im Extruder entstehende Dampf im notwendigen Umfang gebunden wird.

Vorteilhafterweise wird das den Pflanzen enthaltene Wasser dadurch genutzt und entfällt eine aufwendige Trocknung oder Entgasung.

Das Treibmittel hat an der Einsatzmischung im Extruder einen Anteil von 2 bis 10 Gew%. Das Treibmittel kann ganz oder teilweise durch das Kohlendioxid gebildet werden. Der Mindestanteil an Kohlendioxid in der Einsatzmischung im Extruder beträgt in einigen Fällen 0,5 Gew%, in anderen Fällen mehr, z.B. 5Gew%, vorzugsweise 1,5 bis 2,5 Gew%.

Nach der Direktbegasung folgt eine Dispergierung des Treibmittels im Extruder; dann eine Abkühlung der Schmelze/Gemisches auf Extrusionstemperatur und der Austritt aus dem Extruder durch die Extrusionsdüse.

Durch die Extrusionsdüse kann die Schmelze/Gemisch in die jeweils gewünschte Form gebracht werden. Das ist z.B. der oben beschriebene Profilquerschnitt mit quadratischer Grundform und einer Nut an jeder Außenfläche. Das können auch andere eckige und/oder runde Querschnitte, auch Hohlquerschnitte oder Vollquerschnitte.

Von Vorteil ist der Einsatz eines Kalibrators. Der Kalibrator besitzt Flächen, welche die Ausdehnung des entstehenden Schaumes begrenzen. Vorzugsweise besitzt der Kalibrator metallische Flächen, die darüber hinaus gekühlt werden. Damit wird zugleich der Schaum gekühlt und entstehen definierte Flächen. Der Kalibrator kann ein separates Bauteil sein, wie dies aus der Herstellung von Kunststoffschaumplatten aus PS bekannt ist. Der Kalibrator kann aber auch mit der Extrusionsdüse kombiniert sein. Die Düse ist dabei unter ständiger Erweiterung auf das Profilmaß so verlängert, daß ein Aufschäumen des Kunststoffes in der Düse möglich ist. Um zugleich eine ausreichende Oberflächenqualität sicherzustellen, können die Kalibratorflächen reibungsmindernd behandelt bzw. mit bekannten Kunststoffen antihaftend beschichtet sein.

Nach der Erfindung kann der Kalibrator nicht nur glatte Oberflächen, sondern auch Vertiefungen, sogar im Querschnitt hinterschnittene Vertiefungen erzeugen. Eine Unterbrechung und das Ende des Extrusionsvorganges können bei kompliziertem Profil zwar zur Folge haben, daß der Kalibrator zur Herausnahme von Resten nicht ohne weites auseinandergefahren werden kann. Das läßt sich aber ohne weiteres mit einer Trenneinrichtung wie bspw. einer Säge lösen, mit der das Extrudat vor und hinter dem Kalibrator durchtrennt wird. Nach Entfernen des abgetrennten vorderen Extrudatendes kann der sich im Kalibrator befindliche Rest herausgezogen und der Kalibrator zum Beispiel allein oder mitsamt dem Extruder gewartet, eingestellt bzw. verstellt werden oder für einen neuen Extrusionsvorgang vorbereitet werden.

Das erlangte Extrudat kann bei endlosem Extrusionsstrang nach ausreichender Abkühlung zu langen, noch transportfähigen Stäben abgelängt werden oder mit einem Haspel aufgenommen werden. Die Herstellung von Stäben hat den Vorteil, daß die Stäbe in gerader Form anfallen und für die Herstellung von Polstermöbelrahmen nicht mehr gerichtet werden müssen.

Anstelle gerader Stäbe können natürlich auch gekrümmte und/oder verwundene Stäbe aus dem noch extrusionswarmem Extrudat erzeugt werden. Das geschieht durch Krümmung, solange die Krümmung aufgrund der Plastizität des Extrudats noch eine bleibende Verformung verursachen.

Jede gewünschte Krümmung und/oder Verwindung kann auch aus einem geraden Stab nach erneuter Erwärmung des Stabes erfolgen. Zum Teil läßt sich auch eine bleibende Verformung ohne Erwärmung verursachen.

Die Möglichkeit der Verformung insbesondere nach Erwärmung erlaubt es, die nach dem Extrudieren gehaspelten/gewickelten Extrudatstränge wieder zu richten, d.h. in eine gewünschte gerade und/oder gekrümmte Form zu bringen. Für die Wiedererwärmung des Extrudats eignet sich vor allem ein Ofen mit Temperatursteuerung.

Aus den Stäben und Strängen lassen sich die gewünschten Teile für eine Polstermöbelrahmen ohne weiteres ablängen.

Die Verbindung der abgelängten Einzelteile zu einem Rahmen und/oder mit dem Polster kann wie bei dem oben beschriebenen Aluminiumprofil erfolgen, vorteilhafterweise aber auch mit Klammer oder Polsternägeln, sogar mit Holzschrauben. Darüber hinaus besteht die Möglichkeit zu Kleben und auch zum Verschweißen. Es zeigt sich, daß der Kunststoffschaum trotz des Pflanzenanteiles noch verschweißbar ist.

Zur Verbindungstechnik der oben beschriebenen Aluminiumprofile gehören auch Eckverbinder. Solche Eckverbinder lassen sich auch aus dem erfindungsgemäßen Extrudat herstellen.

Der besondere Vorteil der Extrusion ist die rationelle Fertigung eines Profilstranges. Der Profilstrang kann einfachen Querschnitt haben, z.B. runden oder rechteckigen Querschnitt. Dabei kann der rechteckige Querschnitt auch flach sein, so daß ein brettförmiger Querschnitt entsteht. Das erlaubt die Herstellung von Brettern durch Ablängen des Profilstranges als Holzbrettsubstitut.
Sofern der Querschnitt noch flacher eingestellt wird, entstehen Folienbahnen.
Auf dem gleichen Wege können Balken als Holzbalkensubstitute erstellt werden.

Zeitgemäße Extruder erlauben darüber hinaus die Herstellung von Hohlprofilen und komplizierten Profilquerschnitten, z.B. Schmuckleisten für Decken, Fenster, Türen, Möbeln oder Fußbodenleisten.
Wahlweise kann das Profil auch die gleiche Form wie in der WO 99/11161 besitzen.
Die dort dargestellten Profile besitzen quadratischen Querschnitt, wobei in jeder Seitenfläche eine Nut etwa T-förmige Nut vorgesehen ist. In die Nut lassen sich Kopfschrauben und Befestigungsanker einschieben. Darüber hinaus sind Stege an den Nutenden hinterschnitten, so daß dort eine Verhakung stattfinden kann.
Dieses Konzept ist auch mit anderen Querschnitten, eckigen und/oder runden Querschnitten mit mehr Nuten oder weniger Nuten an einer Seite oder an mehreren Seiten anwendbar.

Darüber hinaus können die dargestellten Profile über die oben beschriebenen Armierungs/Verstärkungsfasern hinaus mit einem Armierungsprofil kombiniert werden. Das Armierungsprofil kann ein Blech oder ein Stabstahl sein. Es kann von außen in eine Nut greifen oder innen in einem Profilhohlraum positioniert werden.
Das Armierungsprofil kann nach der Fertigung des oben beschriebenen Profils positioniert werden. Es kann auch beim Extrudieren mitgeführt werden.
Wahlweise besitzt das Armierungsprofil auch auf seiner Länge Ausnehmen bzw. Einschnitte, in den sich das extrudierte Profil mit dem Armierungsprofil verhakt.

Zur Verbindung von Profilabschnitten können wie in der WO 99/11161 Eckstücke/Verbinder eingesetzt werden. Diese Teile können durch Verformung von Profilstücken entstehen.
Wahlweise können diese Teile auch als Formstücke durch Spritzgießen der Schmelze erzeugt werden. Dabei findet vorzugsweise die gleiche oder eine andere Mischung von Kunststoff und Pflanzenpartikeln wie bei den Extrusionsprofilen Anwendung.

Wahlweise können aus den Extrusionsprofilen durch Warmverformung auch andere Formstücke hergestellt werden. Das gilt unter anderem für Innenverkleidungen in Kraftfahrzeugen.

Im übrigen können gerade Profilstücke grundsätzlich auch wie die beschriebenen Formstücke durch Spritzgießen hergestellt werden.

Das Spritzgießen kann auch für die Herstellung anderer Formstücke Anwendung finden. Bei großen Stückzahlen ist das Spritzgießen regelmäßig wirtschaftlicher als die Warmverformung.

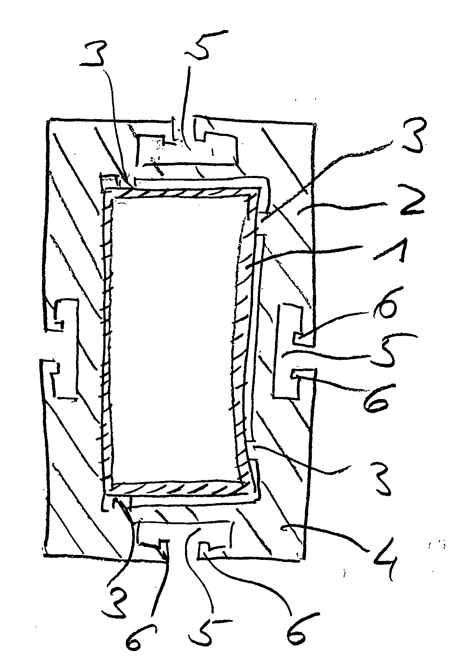

In der Zeichnung ist ein Ausführungsbeispiel eines Querschnittes für ein Extrusionsprofil, zusammen mit einem Armierungsprofil dargestellt.

Mit 1 ist ein Blechprofil aus Stahl bezeichnet. Es ist ein Hohlprofil und besitzt einen rechteckförmgen Querschnitt. Es wird von einem Extrusionsprofil 2 umgeben, das gleichfalls als Hohlprofil ausgebildet ist und einen rechteckförmigen Querschnitt besitzt.

Dabei sind an der Innenfläche des Extrusionsprofils nachgiebige Noppen 3 vorgesehen, die eine kontrollierte Einspannung des Blechprofiles im Extrusionsprofil erlauben; zugleich aber die Montage des Blechprofiles in dem Extrusionsprofil nicht wesentlich behindern.

An den vier Außenflächen des Extrusionsprofils sind Nuten 5 mit T-förmigem Querschnitt vorgesehen. Die den T-förmigen Querschnitt bestimmenden Stege sind bei 6 hinterschnitten, so daß dort eine Verhakung stattfinden kann.

## Patentansprüche

1. Holzsubstitut, insbesondere für Möbel, Innenausbau, Messebau oder Kfz-Auskleidungen, **gekennzeichnet durch** ein Extrudat bzw. eine Spritzgußmasse aus Kunststoff und zerkleinerten Pflanzenpartikeln,
wobei der Kunststoffanteil weniger als 50 Gew%, vorzugsweise weniger als 40Gew% und noch weiter bevorzugt weniger als 30Gew% ist.

2. Holzsubstitut nach Anspruch 1, **gekennzeichnet durch** die Verwendung von gepreßten Pellets als Einsatzmaterial im Extruder bzw. der Spritzgußmaschine.

3. Holzsubstitut nach Anspruch 2, **gekennzeichnet durch** ein Schüttgewicht der Pellets von mindestens 400 Gramm pro Liter, vorzugsweise mindestens 500 Gramm pro Liter und noch weiter bevorzugt von mindestens 600 Gramm pro Liter.

4. Holzsubstitut nach Anspruch 2 oder 3, **gekennzeichnet durch** Pelletdurchmesser bis 14 mm und Pelletlängen bis 100 mm.

5. Holzsubstitut nach einem der Ansprüche 1 bis 4, **gekennzeichnet durch** die Verwendung von Brennstoff-Pellets und/oder von Pellets mit Bindemittel oder ohne Bindemittel.

6. Holzsubstitut nach einem der Ansprüche 1 bis 5, **gekennzeichnet durch** die Verwendung von PE und/oder PS und/oder PU und/oder von PP als Kunststoff.

7. Holzsubstitut nach Anspruch 6, **gekennzeichnet durch** die Verwendung von PP mit einem MFR/MFI von mindestens 10 Gramm pro 10 min bei einer Temperatur von 190 Grad Celsius.

8. Holzsubstitut nach Anspruch 7, **gekennzeichnet durch** die Verwendung von Haftvermittlern zur Erhöhung der Haftung zwischen Kunststoff und Holz.

9. Holzsubstitut nach Anspruch 8, **gekennzeichnet durch** die Verwendung von EVA als Haftvermittler und/oder **durch** Hydrophobierung der Pflanzenpartikel und/oder die Verbesserung der Haftung **durch** Reaktion des Lignins mit Wasser.

10. Holzsubstitut nach Anspruch 1 bis 9, **gekennzeichnet durch** die Verwendung als Konstruktionsmaterial und/oder für Sichtflächen.

11. Holzsubstitut nach Anspruch 10, **dadurch gekennzeichnet, daß** bei Verwendung anderer Pflanzen als Holz nur Pflanzen verwendet werden, die eine Zug- und/oder Druckfestigkeit besitzen, die mindestens 50 % der Festigkeit von Holz ist.

12. Holzsubstitut nach einem der Ansprüche 1 bis 11, **gekennzeichnet durch** die Verwendung von Stroh, Schrot und Heu oder Holzreste.

13. Holzsubstitut nach einem der Ansprüche 1 bis 12, **gekennzeichnet durch** einen Pflanzenanteil von mindestens 70 Gew% bezogen auf das Extrudat bzw. Spritzgußmasse.

14. Holzsubstitut nach einem der Ansprüche 1 bis 13, **gekennzeichnet durch durch** einen maximalen Pflanzenanteil im Extrudat bzw. Spritzgußmasse von 95Gew%, vorzugsweise 85 Gew% bezogen auf das Extrudat bzw. Spritzgußmasse.

15. Holzsubstitut nach einem der Ansprüche 1 bis 14, **gekennzeichnet durch** die Verwendung von Pflanzenteilen, die beim Einsatz in herkömmlichen Extrudern mindestens 10% kleiner als die Durchgängigkeit des Extruders sind.

16. Holzsubstitut nach Anspruch 15, **dadurch gekennzeichnet, daß** beim Einsatz von Fasermaterial ein Material mit einem Durchmesser verwendet wird, der mindestens 30 % kleiner als die Durchgängigkeit des Extruders ist.

17. Holzsubstitut nach einem der Ansprüche 1 bis 16, **gekennzeichnet durch** Verwendung von Extruderneubauten oder Extruderumbauten mit einer Duchgängigkeit, die den gewünschten Partikelabmessungen angepaßt sind, wobei das Verhältnis der Durchgängigkeit zu den Partikelabmessungen das gleiche ist wie bei dem Einsatz von Pflanzenpartikeln in herkömmlichen Extrudern.

18. Holzsubstitut nach einem der Ansprüche 1 bis 17, **gekennzeichnet durch** Partikel mit einem maximalen Feinheitsgrad von 0,005 mm und/oder einem maximalen Durchmesser von 0,5 mm.

19. Holzsubstitut nach einem der Ansprüche 1 bis 18, **gekennzeichnet durch** Fasern, deren Länge 0, 5 bis 15 mm beträgt.

20. Holzsubstitut nach einem der Ansprüche 1 bis 19, **gekennzeichnet durch** Zerkleinerung der Pflanzenteile und/oder Absiebung der gewünschten Partikelgrößen

21. Holzsubstitut nach Anspruch 20, **gekennzeichnet durch** die Verwendung chemischer Treibmittel und/oder **durch** eine Direktbegasung im Extruder für die Herstellung eines geschäumten Extrudats.

22. Holzsubstitut nach Anspruch 21, **gekennzeichnet durch** die Verwendung von Kohlendioxid und Wasser als Treibmittel, wobei die den Pflanzen enthaltene Feuchtigkeit als Treibmittel und/oder als Gleitmittel und/oder als Nukleierungsmittel mitgenutzt wird und/oder als Extrusions- und Treibmittelhilfe bei der Verwendung von Kohlendioxid genutzt wird oder **durch** eingetragenes Kohlendioxid als Kohlensäure gebunden wird.

23. Holzsubstitut nach einem der Ansprüche 1 bis 22, **gekennzeichnet durch** die Trocknung der Pflanzenpartikel auf ein gewünschtes Maß oder die Beseitigung unerwünschter Feuchtigkeitsanteile nach deren Verdampfung im Extruder **durch** Entgasung.

24. Holzsubstitut nach einem der Ansprüche 21 bis 23, **gekennzeichnet durch** einen Treibmittelanteil von 2 bis 10 Gew% bezogen auf die Einsatzmischung im Extruder.

25. Holzsubstitut nach Anspruch 24, **dadurch gekennzeichnet, daß** der Kohlendioxidanteil im Treibmittel 0,5 bis 5 Gew%, vorzugsweise 1,5 bis 2,5 Gew%, bezogen auf die Einsatzmischung im Extruder beträgt.

26. Holzsubstitut nach einem der Ansprüche 21 bis 25, **gekennzeichnet durch** einen Druck von mindestens 100 bar unmittelbar vor der Extrusionsdüse bei der Verwendung von PP.

27. Holzsubstitut nach einem der Ansprüche 1 bis 26, **gekennzeichnet durch** die Verwendung eines Extruders mit mindestens einem Element, daß als Doppelschneckenextruder ausgebildet ist und/oder einem Element, daß als Planetwalzenextruder ausgebildet ist und/oder einer maximalen Behandlungstemperatur für die Pflanzen im Extruder von 200 bis 230 Grad Celsius und/oder eine Verweildauer der Pflanzen im Extruder von maximal 15 min.

28. Holzsubstitut nach einem der Ansprüche 1 bis 27, **gekennzeichnet durch** die Verwendung eines seperaten Kalibrators, der die Ausdehnung des Schaumes nach Verlassen der Extrusionsdüse begrenzt, oder **durch** Verwendung einer Extrusionsdüse mit Kalibrierungsflächen.

29. Holzsubstitut nach Anspruch 28, **gekennzeichnet durch** einen Kalibrator mit gekühlten Metallflächen.

30. Holzsubstitut nach Anspruch 28 oder 29, **dadurch gekennzeichnet, daß** der Kalibrator eine Abbildung der gewünschten Querschnittsform des Extrudat darstellt.

31. Holzsubstitut nach einem der Ansprüche 1 bis 30, **gekennzeichnet durch** die Verformung des Extrudats noch in der Extrusionshitze oder nach anschließender Erwärmung.

32. Holzsubstitut nach Anspruch 31, **gekennzeichnet durch** die Verwendung eines temperaturgesteuerten Ofens für die Extrudat bzw. Spritzgußmaterialerwärmung.

33. Holzsubstitut nach einem der Ansprüche 1 bis 32, **gekennzeichnet durch** die Herstellung ungewickelter Extrudats oder **durch** die Aufwicklung des Extrudats , wobei der aufgewickelte Strang zur Anwendung abgewickelt, abgelängt und gerichtet wird.

34. Holzsubstitut nach einem der Ansprüche 1 bis 33, **gekennzeichnet durch** die Ablängung des Extrudats und dessen Verbindung mit anderen Extrudatlängen oder mit Spritzgußteilen oder anderen Teilen.

35. Holzsubstitut nach Anspruch 34, **gekennzeichnet durch** eine unmittelbare Verbindung oder eine mittelbare Verbindung über Zwischenstücke und/oder **durch** eine Schraubverbindung oder eine Klebeverbindung oder eine Schweißverbindung.

36. Holzsubstitut nach Anspruch 35, **gekennzeichnet durch** die Verwendung von Spritzguteilen für Eckstücke.

37. Holzsubstitut nach einem der Ansprüche 1 bis 36, **gekennzeichnet durch** die Verwendung für eckige und/oder runde Profile und/oder für Hohlprofile und/oder für Profile mit eingeformten Nuten.

38. Holzsubstitut nach einem der Ansprüche 1 bis 37, **gekennzeichnet durch** Armierungen im Extrudat und/oder im Spritzgußteil.

39. Holzsubstitut nach Anspruch 38, **gekennzeichnet durch** eine Faserarmierung und/oder eine Armierung aus Blech oder Stabstahl.

40. Holzsubstitut nach Anspruch 38 oder 39, **gekennzeichnet durch** ein beim Extrudieren mitgeführtes Blech oder Stabstahl oder ein nach dem Extrudieren positioniertes Blech oder Stabstahl.

41. Holzsubstitut nach Anspruch 40, **gekennzeichnet durch** Blech oder Stabstahl, der von außen in das Extrudat greift und/oder in Hohlräume des Extrudats eingesetzt ist.

42. Holzsubstitut nach Anspruch 40 oder 41, **dadurch gekennzeichnet, daß** das in Hohlräumen eingesetzte Blech oder Extrudat an Noppen des Extrudats abstützt.

43. Holzsubstitut nach einem der Ansprüche 39 bis 42, **gekennzeichnet durch** eine Verhakung und/oder Verzahnung des Extrudats mit dem Blech oder Stabstahl.
